# EUROPEAN PATENT APPLICATION

(11) **EP 2 475 075 A1**
(43) Date of publication of application: **11.07.2012**
(21) Application number: 11150145.8
(22) Date of filing: 05.01.2011
(51) Int. Cl.: H02K 1/14

(54) **Motor construction**

(71) Applicant: Robert Bosch GmbH, 70469 Stuttgart (DE)
(72) Inventor: Jordan, Christopher Mark, Stowmarket, Suffolk IP14 2RA (GB)

(57) **Abstract**

The present invention relates to motor construction, in particular to electronically-commutated motors. In its broadest sense, the present invention provides a motor stator comprising an annular stator body comprising a plurality of radially inwardly directed stator teeth coupled to the stator body; characterised in that at least some of the teeth are formed separately from and are mountable to the stator body. Preferably, half of the stator teeth are mountable to the stator body and the remaining teeth are formed with the stator body. More preferably, alternate stator teeth are mountable to the stator body. Alternatively, all stator teeth are mountable to the stator body.

## Description

The present invention relates to motor construction, in particular to electronically-commutated motors.

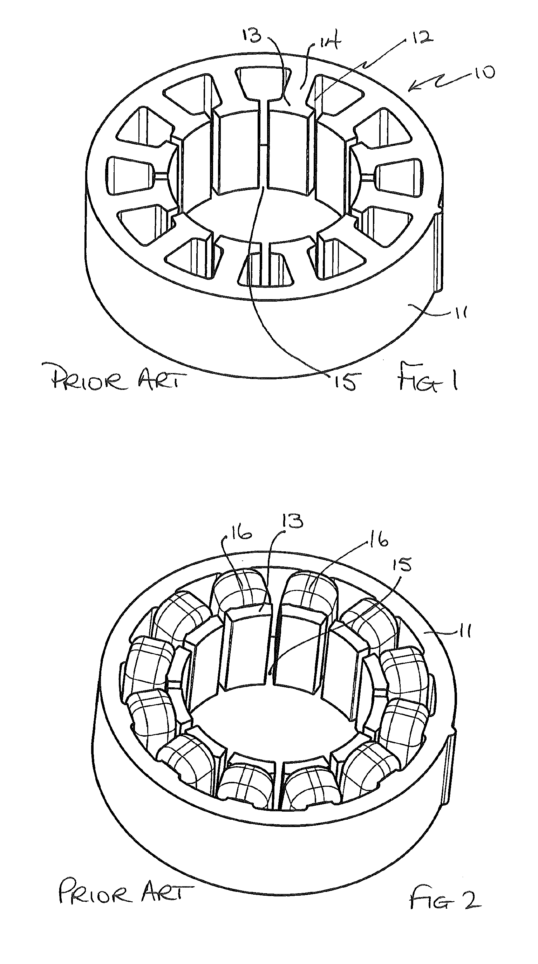

Electronically-commutated motors have a stator pack comprising a ring of teeth onto which are wound copper wire windings. This is illustrated in Figures 1 and 2 in which Figure 1 schematically shows a bare stator lamination pack 10. Such a stator lamination pack is formed form a plurality of aligned steel laminations (not shown). The pack 10 has an annular outer ring or "back iron" 11 and has a plurality of radially inwardly directed teeth 12 each having a head 13 coupled to ring 11 by a stem 14. A spacing 15 is provided between adjacent teeth 12. Figure 2 shows the addition of an individual copper wire winding 16 around each stem 13. The windings 16 are electrically coupled as desired to an electronic control circuit (not shown) controlling the operation of the motor. Typically, the windings 16 are connected in parallel or in series with the coils three ahead/behind to provide three angularly displaced magnetic axes and Hall-effect sensors (not shown) are mounted to the lamination pack.

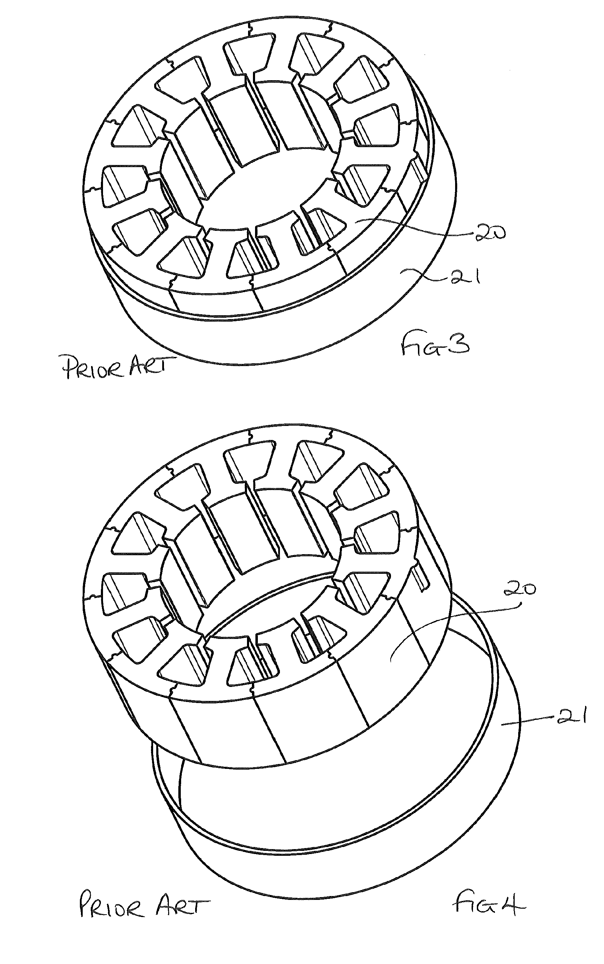

The requirements for individual windings in electronically-commutated motors substantially increases the complexity of their manufacture. Hand winding is an option in low employment cost countries. Otherwise (Figure 3) the stator is normally split into segments 20 for winding but the motor then requires a rigid external case 21 to hold the segments in place, adding to the motor size and weight. Alternatively, winding machines are available, but they are very complicated and therefore expensive. Their slow speed of winding can be increased by increasing the dimensions of spacing 15 between adjacent teeth. However, this leads to lower copper-fill (wire packing density) for the motor in relation to its size and thus reduced performance.

The present invention seeks to overcome these problems.

In its broadest sense, the present invention provides a motor stator comprising an annular stator body comprising a plurality of radially inwardly directed stator teeth coupled to the stator body; characterised in that at least some of the teeth are formed separately from and are mountable to the stator body.

Preferably, half of the stator teeth are mountable to the stator body and the remaining teeth are formed with the stator body.

More preferably, alternate stator teeth are mountable to the stator body.

Alternatively, all stator teeth are mountable to the stator body.

The present invention also provides a motor comprising a motor stator as defined above.

The above and other aspects of the invention will now be described in further detail, by way of example only, with reference to the accompanying drawings, in which:
Figure 1 is a perspective view of a first prior art stator lamination pack;
Figure 2 is a perspective view of the stator lamination pack of Figure 1 with coils wound thereon;
Figure 3 is a perspective view of a second prior art stator lamination pack;
Figure 4 is a perspective view of the stator lamination pack of Figure 3 in a part-disassembled configuration;
Figure 5 is a perspective view of an embodiment of a stator lamination pack in accordance with the present invention;
Figure 6 is a perspective view of a single stator lamination of the pack of Figure 5, in a part-disassembled configuration;
Figure 7 is a plan view of the stator lamination pack of Figure 5;
Figure 8 is a plan view of a first alternative embodiment of a stator lamination pack in accordance with the present invention;
Figure 9 is a plan view of a second alternative embodiment of a stator lamination pack in accordance with the present invention; and
Figure 10 is a plan view of a third alternative embodiment of a stator lamination pack in accordance with the present invention.

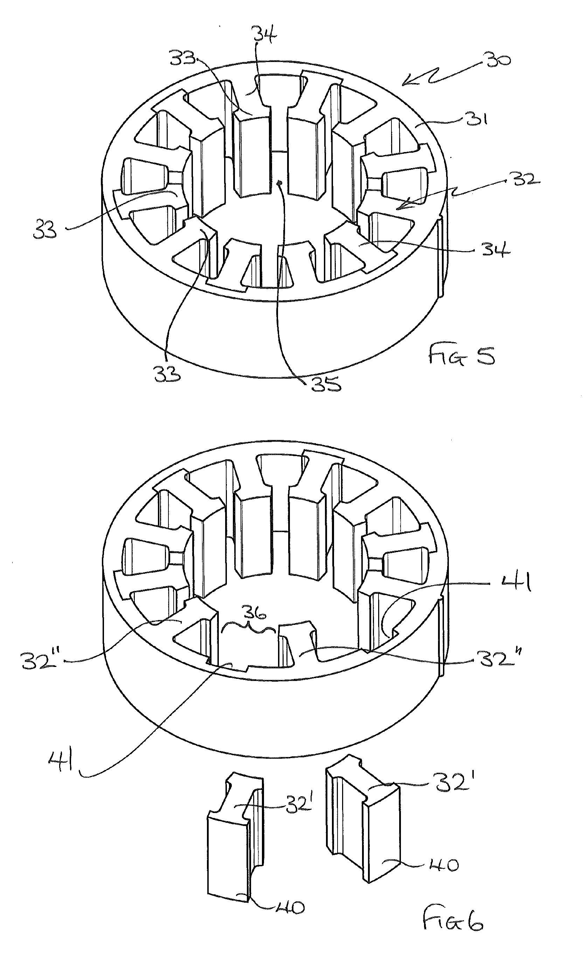

Figures 5 and 6 show an embodiment of a stator lamination pack 30 in accordance with the present invention. The pack is fabricated from a plurality of individual laminations (not shown for clarity) in a conventional manner. The assembled pack is generally as described above in respect of the prior art stator laminator packs and comprises an annular ring 31 having a plurality of radially inwardly directed teeth 32 each having a head 33 coupled to ring 31 by a stem 34, heads 33 being dimensioned to provide a spacing 35 between adjacent teeth heads.

A number of teeth are formed separately from annular ring 31 and are mountable thereto to form a complete stator lamination pack. Preferably, these would be separated directly from the annular ring as part of the annular ring forming process. As shown in Figure 6, in preferred embodiments, alternate teeth 32' are provided as separate mountable teeth. The separate teeth 32' can be easily wound with copper wire at a location remote from the stator lamination pack. Those fixed teeth 32" formed integrally with ring 31 can also be easily wound by conventional automated winding machines by virtue of the increased spacing 36 between adjacent fixed teeth 32".

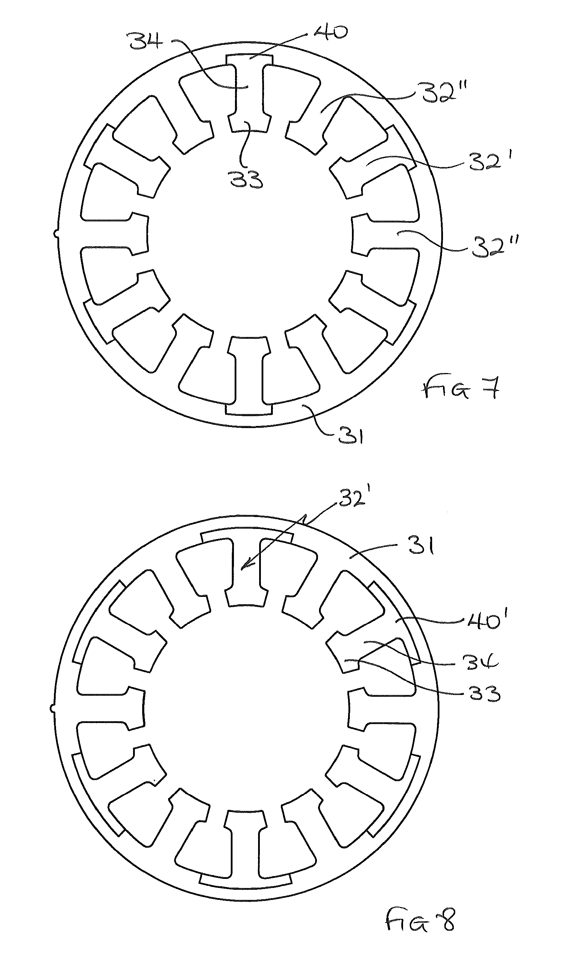

Figure 7 is a plan view of the embodiment of Figures 5 and 6. Mountable teeth 32' have a head 33 and stem 34 terminating in a foot 40 receivable by a recess 41 in ring 31. In this embodiment, foot 40 is dimensioned to pass through spacing 36 between adjacent fixed teeth 32' to allow for radial assembly of the completed wound stator lamination pack.

In the alternative embodiment shown in Figure 8, foot 40' is enlarged compared with that of Figure 7 for axial fixing of separate teeth 32' to ring 31. End insulation for the windings cannot overlap the joint between foot 40 and recess 41. Accordingly, the enlarged foot 40' of this embodiment allows a larger winding to be wound onto separate teeth 32' prior to mounting in ring recess 41 in an axial direction.

Separate teeth 32' can be retained in place preferably by means of an appropriate interference fit. Other methods such as welding, forming or adhesive are equally suitable.

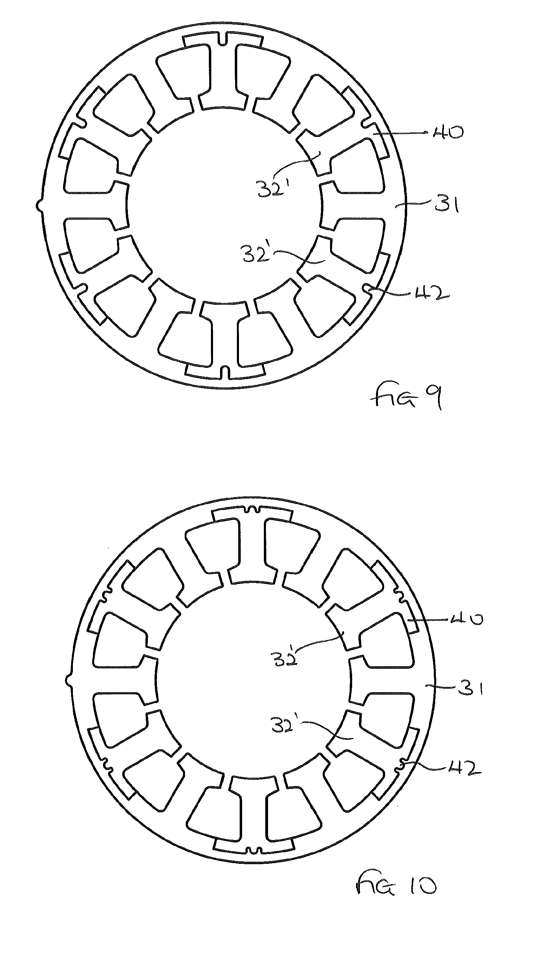

Figures 9 and 10 show yet further alternative embodiments in which foot 40 and recess 41 are formed with co-operating male and female elements 42 to improve the fit and alignment of teeth 32' to ring 31. Alternative arrangements will, of course, be readily apparent to the skilled person.

## Claims

1. A motor stator comprising an annular stator body comprising a plurality of radially inwardly directed stator teeth coupled to the stator body; **characterised in that** at least some of the teeth are formed separately from and are mountable to the stator body.

2. A motor stator as claimed in claim 1, wherein half of the stator teeth are mountable to the stator body and the remaining teeth are formed with the stator body.

3. A motor stator as claimed in claim 2, wherein alternate stator teeth are mountable to the stator body.

4. A motor stator as claimed in claim 1, wherein all stator teeth are mountable to the stator body.

5. A motor comprising a motor stator as claimed in any one of claims 1 to 4.
